Europäisches Patentamt

(19) European Patent Office

Office européen des brevets

(11) Numéro de publication : **0 256 944 B1**

(12) **FASCICULE DE BREVET EUROPEEN**

(45) Date de publication du fascicule du brevet :
06.11.91 Bulletin 91/45

(51) Int. Cl.$^5$ : **H04B 17/00, G01R 27/28**

(21) Numéro de dépôt : **87401854.2**

(22) Date de dépôt : **07.08.87**

(54) **Banc de mesure pour liaison hertzienne à large bande.**

(30) Priorité : **14.08.86 FR 8611759**

(43) Date de publication de la demande :
**24.02.88 Bulletin 88/08**

(45) Mention de la délivrance du brevet :
**06.11.91 Bulletin 91/45**

(84) Etats contractants désignés :
**DE GB**

(56) Documents cités :
**US-A- 4 090 126**

(73) Titulaire : **Delahaye, Jean-Yves**
**55, rue Jean Jaurès Appt. 542**
**F-92170 Vanves (FR)**
Titulaire : **Vinson, Jean-Paul**
**217, rue de l'Université**
**F-75007 Paris (FR)**

(72) Inventeur : **Delahaye, Jean-Yves**
**55, rue Jean Jaurès Appt. 542**
**F-92170 Vanves (FR)**
Inventeur : **Vinson, Jean-Paul**
**217, rue de l'Université**
**F-75007 Paris (FR)**

(74) Mandataire : **Martinet & Lapoux**
**BP 405**
**F-78055 St. Quentin en Yvelines Cédex (FR)**

## Description

La présente invention concerne un banc de mesure pour liaison hertzienne à large bande totale ou partielle.

Des bancs de mesure pour liaison hertzienne, également appelés analyseurs de liaison hertzienne, sont utilisés pour déterminer la fonction de transfert de tout ou partie de la liaison hertzienne. La fonction de transfert est définie par des variations d'amplitude et du temps de propagation de groupe en fonction de la fréquence. Les techniques de mesure à large bande, c'est-à-dire pour une largeur de bande supérieure à 100 MHz, s'appliquent aux équipements de transmission hertzienne à large bande tels que ceux inclus dans les systèmes de transmission terrestres ou les systèmes de transmission terre-satellite, à leurs sous-ensembles, tels que guides d'onde ou antennes, communs à toute la bande passante de communication, ainsi qu'au milieu de propagation.

Dans un banc de mesure pour liaison hertzienne, une variation en fréquence est établie autour de chaque fréquence de la bande en cours d'exploration pour obtenir à la réception une variation de phase correspondante du signal recu. Cette variation de phase permet de déterminer le temps de propagation de groupe égal à la dérivée de la phase en fonction de la fréquence .

Un tel banc de mesure comprend une partie à l'émission et une partie à la réception. A l'émission, un vobulateur hyperfréquence reçoit en entrée, la somme d'un signal à fréquence basse commandant l'exploration de la bande de la liaison et d'un signal de mesure à fréquence moyenne intermédiaire, pour fournir en sortie, un signal hyperfréquence vobulé par le signal d'entrée. Le signal hyperfréquence vobulé est transmis par la liaison hertzienne à large bande. A la réception, le signal hyperfréquence vobulé reçu est réduit à une fréquence plus basse par un convertisseur-abaisseur de fréquence pour ensuite être démodulé dans un analyseur de liaison hertzienne afin d'obtenir l'information temps de propagation de groupe. L'information d'amplitude est déduite par simple détection d'amplitude du signal vobulé en sortie du convertisseur-abaisseur de fréquence.

Il est nécessaire, pour déterminer la fonction de transfert de la liaison hertzienne à la réception, de connaître à chaque instant la fréquence du signal hyperfréquence vobulé reçu. Il apparaît donc, que l'information fréquence doit être mesurée dans la partie de réception ou qu'elle doit être transmise à partir de la partie d'émission, à l'aide par exemple d'impulsions portées par le signal hyperfréquence vobulé émis. Chaque impulsion correspond au passage de l'exploration par certaines fréquences prédéterminées de la bande. Du fait de la non-linéarité et de l'instabilité de la compression en fréquence, la mesure à la réception en sortie du convertisseur-abaisseur est sujette à erreur. Le signal peut également être perturbé par le milieu de propagation étudié, ou par l'équipement de transmission.

Deux techniques utilisées pour l'identification des fréquences ont été décrites dans l'exposé de Robert EASSON et Robin SHARP intitulé "Amélioration des mesures sur les équipements faisceau hertzien au moyen d'un convertisseur-abaisseur à poursuite" lors du symposium sur les télécommunications et la téléinformatique, 14 et 15 Mars 1986, Palais des Congrès à Versailles.

Une première technique connue consiste à réaliser, à la réception, un signal de marquage pour une fréquence . Le signal à haute fréquence prélevé à la réception, par l'intermédiaire d'un coupleur directionnel, est envoyé vers un ondemètre à cavité suivi d'un détecteur, pour obtenir une impulsion de synchronisation lors du passage par la fréquence d'accord de la cavité. Cette technique présente toutefois l'inconvénient de nécessiter une cavité accordable par fréquence à identifier de la bande explorée. Dans cette technique, l'amplitude de l'impulsion dépendant du niveau de signal reçu, l'information fréquence est susceptible d'être indiscernable des variations d'amplitude du signal, ce qui peut entraîner des erreurs dans l'identification des fréquences.

Une autre technique consiste à moduler à l'émission l'amplitude du signal hyperfréquence, par des impulsions à des instants correspondant au passage de l'exploration par des fréquences prédéterminées de la bande explorée. A la réception est obtenue une série d'impulsions de marquage ajoutées au signal de l'information d'amplitude. Cette technique ne permet pas de séparer correctement l'information de fréquence de l'information d'amplitude. En effet, ou bien la modulation d'amplitude est trop faible et les impulsions se confondent dans les variations d'amplitude et il est impossible de les discerner, ou bien la modulation d'amplitude est trop forte et le récepteur reçoit un signal insuffisant. En outre, la mesure des variations d'amplitude est entachée d'erreurs du fait de la présence des impulsions de marquage.

La précision donnée par ces techniques connues est faible et est généralement limitée par la largeur des impulsions de marquage ou par la non-linéarité de la réception à compression de fréquences. L'erreur relative obtenue pour une excursion de l'ordre de 1 GHz est voisine de 5%.

L'invention vise à fournir un banc de mesure pour liaison hertzienne à large bande offrant une grande précision dans l'identification des fréquences à la réception, sans altérer pour autant les mesures et quelles que soient les variations d'amplitude des paramètres choisis.

A cette fin, un banc de mesure pour liaison hertzienne comprenant :

dans une partie d'émission,

un oscillateur de mesure pour délivrer un signal impulsionnel ayant une fréquence prédéterminée moyenne,

des moyens pour générer un signal d'exploration ayant une fréquence prédéterminée basse et un signal impulsionnel de marquage synchrone avec le signal d'exploration,

des moyens pour sommer le signal d'exploration et un signal analogique en un signal de vobulation,

des moyens de vobulation hyperfréquence commandés par le signal de vobulation produisant un signal vobulé à émettre, et

dans une partie de réception, des moyens recevant le signal vobulé à travers la liaison hertzienne pour analyser des paramètres de la liaison hertzienne, tels que temps de propagation de groupe de la liaison,

est caractérisé en ce qu'il comprend:

dans la partie d'émission,

des moyens pour moduler le signal impulsionnel à fréquence moyenne pendant des impulsions du signal impulsionnel de marquage afin d'obtenir un signal de mesure périodiquement modulé constituant ledit signal analogique appliqué aux moyens pour sommer, et

dans la partie de réception,

des moyens pour déduire des signaux synchrones avec le signal d'exploration à partir de signaux produits par les moyens pour analyser.

Le banc de mesure selon l'invention présente plusieurs avantages :

- une précision dans l'identification des fréquences de l'ordre de 0,2% dans la bande de fréquence explorée ;

- les mesures ne sont en aucune manière perturbées ;

- le signal de mesure peut être modulé de différentes manières, notamment pour véhiculer dans le banc de mesure, outre l'information nécessaire à l'identification de fréquences, une information de service, entre la partie d'émission et la partie de réception.

D'autres caractéristiques et avantages de l'invention apparaîtront plus clairement à la lecture de la description suivante de plusieurs réalisations préférées de l'invention, en référence aux dessins annexés correspondants dans lesquels :

- la Fig.1 est un bloc-diagramme d'une réalisation particulière d'un banc de mesure suivant l'invention, utilisant une modulation de phase du signal de mesure pour porter l'information d'identification de fréquences ;

- La Fig.2 montre des formes d'onde de signaux établis dans la partie d'émission du banc de mesure représenté à la Fig.1 ;

- la Fig.3 montre des formes d'onde de signaux établis dans la partie de réception du banc de mesure représenté en Fig.1;

- la Fig.4 est un bloc-diagramme fonctionnels d'une réalisation simplifiée d'un banc de mesure analogue à celui représenté à la Fig.1 ;

- la Fig.5 représente un démodulateur, réalisé à partir d'une bascule D, pour récupérer des impulsions de marquage ;

- la Fig.6 montre schématiquement un circuit modulateur-codeur permettant de générer des impulsions de marquage codées, pour une version perfectionnée du banc de mesure selon l'invention ;

- la Fig.7 montre des formes d'onde de signaux reçus et établis par le circuit modulateur-codeur de la Fig.6 ; et

- la Fig.8 montre des formes d'onde de signaux reçus et établis par le démodulateur de la Fig.5, dans le cas d'une réalisation utilisant un circuit modulateur-codeur de la Fig.6.

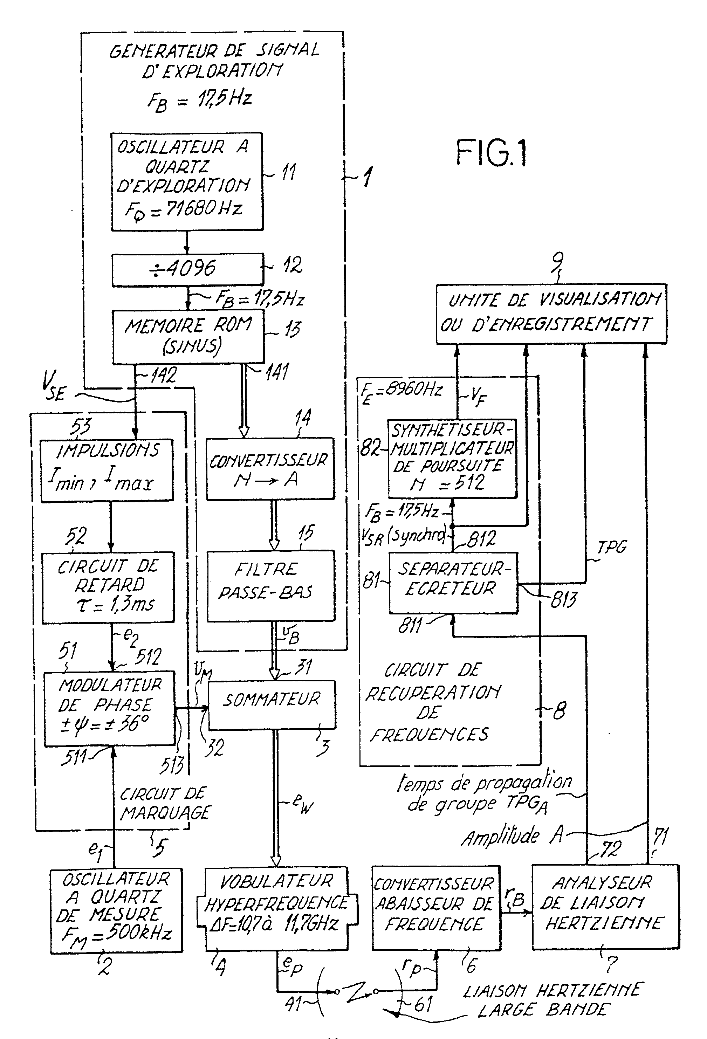

En référence à la Fig.1, un banc de mesure comprend, dans une partie d'émission, un générateur de signal d'exploration 1 produisant un signal analogique sinusoïdal d'exploration $v_B$ ayant une fréquence prédéterminée basse $F_B$, un oscillateur à quartz de mesure 2 produisant un signal impulsionnel $e_1$ ayant une fréquence prédéterminée moyenne intermédiaire $F_M$, un sommateur analogique à deux entrées 3, et un vobulateur hyperfréquence 4 commandé par un signal de commande de vobulation $e_W$ établi par le sommateur 3 afin de produire un signal hyperfréquence dans une bande de très haute fréquence de porteuse de vobulation prédéterminée $\Delta F_W$ à émettre par des équipements d'émission 41 d'une liaison hertzienne à large bande.

Afin de fixer les idées, on se référera dans la suite à une réalisation pratique pour laquelle $F_B$ et $F_M$ sont égales à 17,5 Hz, et à 500 kHz, et $\Delta F_W$ est comprise entre 10,7 et 11,7 GHz.

Dans le générateur 1, le signal sinusoïdal d'exploration $v_B$ est obtenu par des moyens numériques de génération de sinusoïde commandés par un oscillateur de grande stabilité. Ainsi, un oscillateur à quartz 11 produit un signal impulsionnel ayant typiquement une fréquence $F_Q$ = 71 680 Hz, et un diviseur de fréquence par 4096, 12, relié à une sortie de l'oscillateur 11 fournit un signal impulsionnel à la fréquence $F_B$ = 71 680/4096 = 17,5 Hz. Une mémoire morte 13 contient des mots numériques d'échantillon d'une sinusoïdale. La mémoire 13 est adressée cycliquement en lecture par le signal sortant du diviseur de fréquence 12 pour délivrer dans un bus 141 les mots d'échantillons à bits parallèles de la sinusoïdale à chaque période $1/F_B$. Les mots d'échantillon lus sont convertis analogiquement dans un convertisseur numérique-analogique 14 relié au bus 141, en le signal analogique parfaitement sinusoïdal $v_B$ qui est appliqué à une première entrée 31 du sommateur 3 à travers un filtre passe-bas 15.

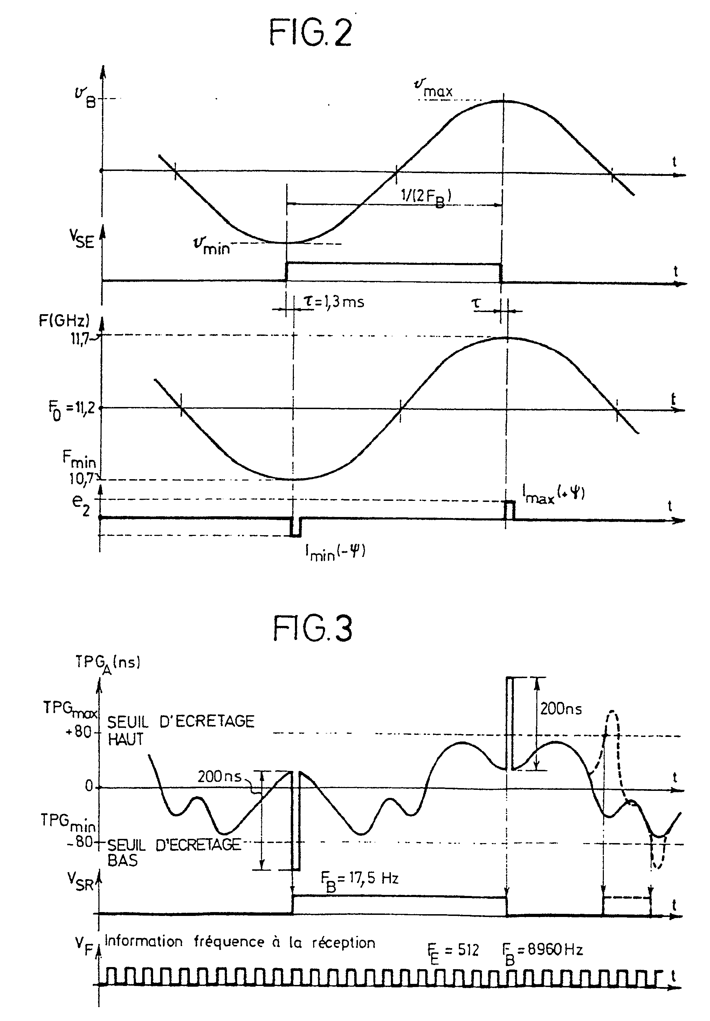

Le signal $v_B$ est montré en haut dans la Fig.2, tandis qu'en dessous dans cette même figure, est montré un signal impulsionnel $V_{SE}$ délivré par une sortie 142 de la mémoire ROM 13. Le signal $V_{SE}$ contient des créneaux ayant une largeur égale à $1/(2F_B)$, chaque créneau ayant des fronts montant et descendant synchrones avec des tensions minimale et maximale $v_{min}$ et $v_{max}$ de la sinusoïdale $v_B$ respectivement.

Comme montré également à la Fig.1, la partie d'émission du banc de mesure comprend un circuit de marquage 5. Le circuit 5 comprend un modulateur de phase 51 ayant une première entrée 511 recevant le signal de mesure $e_1$ et une seconde entrée de commande de phase 512 recevant un signal impulsionnel de marquage $e_2$, tel que montré en bas dans la Fig.2. Le signal $e_2$ est produit au moyen d'un circuit différentiateur 53 et d'un circuit de retard 52 interconnectés en série entre les bornes 142 et 512. Le circuit 53 comprend par exemple deux différentiateurs ou deux bascules monostables déclenchables par les fronts montants et descendants des créneaux du signal $V_{SE}$ afin de produire des impulsions de marquage de phase négatives $I_{min}$ et positives $I_{max}$ ayant une très faible largeur par rapport à $1/(2F_B)$ respectivement en réponse aux crêtes $v_{min}$ et $v_{max}$ du signal $v_B$.

Selon la réalisation pratique, les impulsions $I_{min}$ et $I_{max}$ commandent respectivement des déphaseurs de $-\Psi = -\Pi/5 = -36°$ et $+\Psi$ inclus dans le modulateur de phase 51. Ainsi le signal de mesure $v_M$ a trois états de phase $-\Psi$, $+\Psi$ et 0 et correspond au signal impulsionnel $e_1$ respectivement avec un retard de phase de $-\Psi$, une avance de phase $+\Psi$ et aucun décalage de phase pendant les impulsions $I_{min}$, les impulsions $I_{max}$ et entre ces impulsions. Le signal $v_M$ est appliqué par une sortie 513 du modulateur 51 à une seconde entrée 32 du sommateur 3.

Le circuit de retard 52 impose un retard $\tau$, typiquement de 1,3 ms, afin de compenser un retard introduit par la fonction de transfert du vobulateur 4 entre la composante de son signal de sortie correspondant au signal de mesure $v_M$ à fréquence moyenne et la composante correspondant au signal d'exploration $v_B$ à basse fréquence.

Le signal de mesure modulé en phase $v_M$ et le signal d'exploration $v_B$ sont additionnés en le signal de commande de vobulation $e_W$ dans le sommateur 3. Le signal $e_W$ commande d'une manière classique la vobulation dans le vobulateur 4, les crêtes $v_{min}$ et $v_{max}$ correspondant à des fréquences minimale $F_{min} = 10,7$ GHz et maximale $F_{max} = 11,7$ GHz de la bande de fréquence porteuse $\Delta F_W$ pour laquelle la fonction de transfert de la liaison hertzienne est analysée. Un signal vobulé $e_P$ est transmis alors dans la liaison hertzienne à travers les équipements d'émission 41. Une troisième ligne de la Fig.2 montre la variation moyenne de la fréquence F du signal $e_P$ due au signal $e_W$, le signal de mesure $v_M$ ayant une amplitude et une fréquence nettement plus petite et plus grande que celles du signal $v_B$ respectivement.

Dans une partie de réception du banc de mesure également montré à la Fig.1, on trouve classiquement après des équipements de réception hyperfréquence 61, un convertisseur-abaisseur de fréquence 6 transposant la bande de fréquence $\Delta F$ d'un signal reçu $r_P$, correspondant au signal émis $e_P$, dans une bande fréquence typiquement de 25 MHz, centrée autour d'une fréquence de 140 MHz, Un signal vobulé transposé en fréquence $r_B$ délivré par le convertisseur 6 est appliqué à un analyseur connu de liaison hertzienne 7 qui fournit par une première sortie 71 un signal A obtenu par détection d'amplitude du signal vobulé transposé en fréquence $r_B$. Le signal A a une amplitude proportionnelle à l'amplitude du signal hyperfréquence reçu $r_P$ et représente l'affaiblissement de la liaison hertzienne pour la bande de fréquence explorée. Le signal A issu de l'analyseur de liaison hertzienne 7 est appliqué directement vers une unité de visualisation ou d'enregistrement 9.

L'analyseur de liaison hertzienne 7 fournit également par une seconde sortie 72, un signal $TPG_A$ obtenu à partir du signal vobulé $r_B$ par démodulation de fréquence suivie d'une démodulation de phase à la fréquence de mesure $F_M$ égale à 500 kHz. Le signal $TPG_A$, raprésenté en haut de la Fig.3, est équivalent à la somme d'un signal TPG proportionnel au temps de propagation de groupe et d'un signal impulsionnel proportionnel au signal impulsionnel de marquage $e_2$ portant les impulsions de marquage $I_{min}$ et $I_{max}$.

Comme représenté à la Fig.1, le signal $TPG_A$ est transmis vers un circuit de récupération de fréquences 8. Le circuit 8 comprend un circuit séparateur-écrêteur 81 et un synthétiseur-multiplicateur de poursuite connu 82. Le circuit séparateur-écrêteur 81 reçoit par une entrée 811 le signal $TPG_A$ issu de l'analyseur 7 et portant les impulsions de marquage $I_{min}$ et $I_{max}$ et délivre, par une première sortie 812, un signal de synchronisation à la réception $V_{SR}$ et, par une deuxième sortie 813, le signal TPG proportionnel au temps de propagation de groupe et appliqué à l'unité de visualisation ou d'enregistrement 9. Le signal de synchronisation à la réception $V_{SR}$ est obtenu à la suite d'opérations d'écrêtage au delà d'un seuil d'écrêtage haut $TPG_{max} = 2/(25 \text{ MHz}) = 80$ ns et d'un seuil d'écrêtage bas $TPG_{min} = 80$ ns. Comme montré à une seconde ligne de la Fig.3, le signal $V_{SR}$ est un signal en créneau à la fréquence $F_B$ de 17,5 Hz dont le front montant correspond à l'impulsion $I_{min}$, et donc à la fréquence $F_{min} = 10,7$ GHz, et le front descendant correspond à l'impulsion $I_{max}$, et donc à la fréquence $F_{max} = 11,7$ GHz. Le signal $V_{SR}$ est appliqué à l'unité de visualisation ou d'enregistrement 9 et au synthétiseur-multiplicateur de poursuite 82. Le synthétiseur réalise à partir du signal $V_{SR}$ une opération de multiplication de la fréquence $F_B$ par un facteur N, ici égal à 512, pour obtenir un signal d'échantillonnage de fréquences $V_F$, comme représenté en bas de la Fig.3, dont la fréquence d'échantillonnage $F_E$ de 8960 Hz est égale à la fréquence $F_B = 17,5$ Hz multipliée par le facteur $N = 512$. Le signal d'échantillonnage $V_F$ est rigoureusement synchrone au signal de synchronisation $V_{SR}$ et permet de fournir $N$ repères de fréquence dans la bande de fréquence porteuse $\Delta F_W$ explorée à l'unité de visualisation 9.

Dans cette réalisation, où $\Delta F_W$ est comprise entre 10,7 GHz et 11,7 GHz et N est égal à 512, les fréquences sont visualisées avec un incrément de l'ordre de $1000/512 = 19,5$ MHz.

Dans le banc de mesure selon l'invention, l'exactitude de l'information relative à la fréquence récupérée dépend essentiellement de la linéarité de la conversion tension-fréquence réalisée par le vobulateur hyperfréquence ainsi que des fronts avant des impulsions de marquage. L'erreur apportée par les fronts avant est très négligeable par rapport à l'erreur due à la non-linéarité du vobulateur 4. Le vobulateur utilisé est de type YIG, et est constitué par des appareils HP 86245A option H12 et HP 8350B commercialisés par HEWLETT-PACKARD. Dans ces conditions, l'erreur relative en fréquence mesurée sous une température ambiante de 25°C est de l'ordre 0,2% pour la bande de fréquence comprise entre 10,7 GHz et 11,7 GHz.

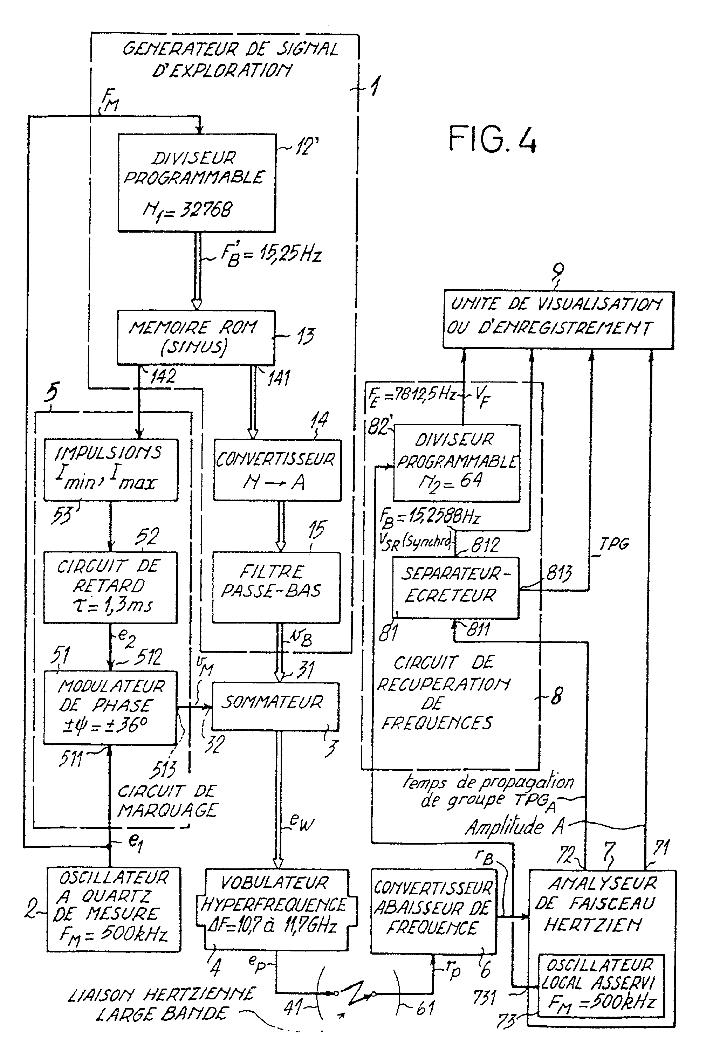

A la Fig.4 est représenté un banc de mesure simplifié par rapport à la réalisation précédente. Dans ce banc de mesure, par ailleurs identique, deux simplifications ont été apportées de manière à réduire le coût du banc. Une première possibilité de simplification consiste à piloter le générateur de signal d'exploration 1 par l'oscillateur à quartz de mesure 2. A cette fin, l'oscillateur de grande stabilité 11 et le diviseur de fréquence 12 dans le générateur de signal d'exploration 1 selon la précédente réalisation sont remplacés par un diviseur de fréquence programmable 12', comme montré à la Fig.4. Le diviseur de fréquence programmable 12' reçoit le signal impulsionnel $e_1$ à la fréquence $F_M$ de 500 kHz issu de l'oscillateur à quartz de mesure 2 et fournit en sortie un signal impulsionnel à la fréquence basse $F'_B$ de 15,2588 Hz, pour un rapport de fréquence $N_1$ programmé à 32768. La mémoire ROM 13 est alors adressée à la fréquence $F'_B = 15,2588$ Hz pour générer un signal d'exploration $v_B$ et un signal impulsionnel de marquage $e_2$ de même fréquence.

Une seconde simplification solidaire de la première consiste à remplacer, dans la partie de réception le synthétiseur-multiplicateur de poursuite 82 dans le circuit de récupération de fréquences 8 par un diviseur de fréquence programmable 82', comme montré à la Fig.4. En effet, l'analyseur de liaison hertzienne 7 comprend, comme il est connu, un oscillateur local de fréquence $F_M$ rigoureusement asservi sur la fréquence $F_M$ de l'oscillateur à quartz de mesure 2 de la partie d'émission, pour les besoins de la démodulation de phase. L'oscillateur à quartz asservi 73 fournit, via une sortie 731 de l'analyseur 7, un signal de fréquence $F_M$ synchrone avec le signal de synchronisation à la réception $V_{SR}$, sachant que le signal $V_{SR}$ est dérivé des impulsions de marquage générées à partir de l'oscillateur à quartz de mesure 2 dans la partie d'émission.

Le signal de fréquence $F_M$ de 500 kHz issu de la sortie 731 est appliqué en entrée du diviseur de fréquence 82' pour fournir en sortie un signal d'échantillonnage de fréquences $V_F$ ayant une fréquence $F_E$ égale à 7812,5 Hz et correspondant à un rapport de division programmé à $N_2 = 64$. Le rapport $N_2$ est choisi pour obtenir un nombre M de repères de fréquence toujours égal à 512 dans l'unité 9.

Dans les deux réalisations décrites précédemment et montrées aux Figs.1 et 4, le signal de synchronisation à la réception $V_{SR}$ peut être perturbé pour des fréquences $F_B$ élevées du signal d'exploration $v_B$, c'est-à-dire pour des fréquences supérieures à 100 Hz. En effet, comme montré par des formes d'onde en traits interrompus courts à la Fig.3, le signal $TPG_A$ dans sa partie contenant l'information temps de propagation de groupe subit alors de fortes variations et dépasse les seuils d'écrêtage haut $TPG_{max}$ et bas $TPG_{min}$. Il est donc souhaitable d'éliminer l'interaction entre ces deux signaux, notamment en récupérant les impulsions de marquage au niveau de la démodulation dans l'analyseur de liaison hertzienne 7. Comme cela apparaîtra dans les paragraphes suivants, d'autres types de modulation du signal de mesure $v_M$ par les impulsions de marquage permettent de réaliser entre autre cet objectif.

La modulation de phase du signal de mesure $v_M$ peut être pour cet objectif avantageusement remplacé par une modulation de fréquence. Par exemple, dans le cas où l'on réalise la synchronisation en réception à partir d'une seule fréquence identifiée, les impulsions de marquage peuvent être toutes positives et correspondent à une fréquence prédéterminée.

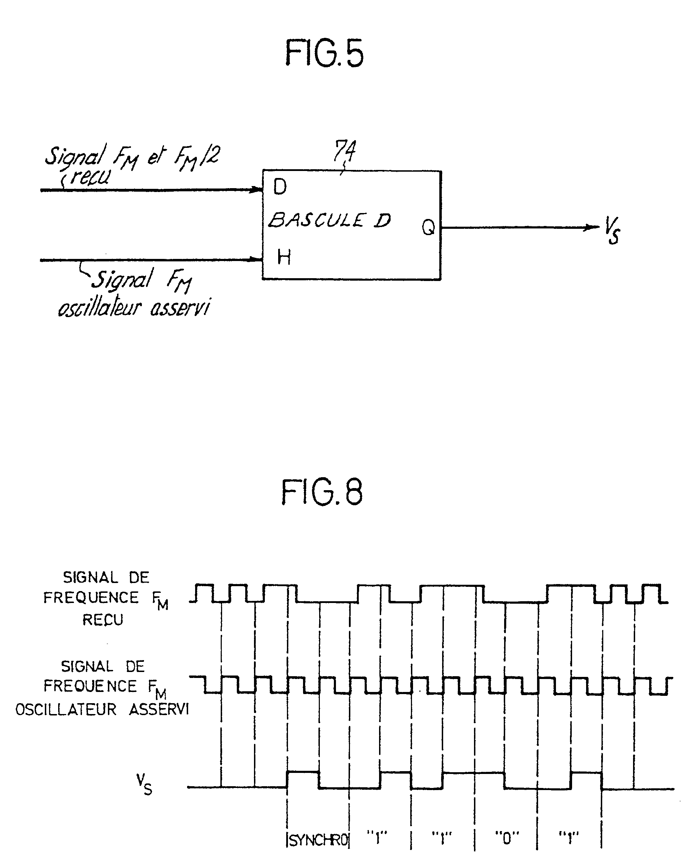

Une première solution consiste à remplacer le modulateur de phase 51 dans la partie d'émission par un circuit diviseur de fréquence par deux ayant également deux entrées 511 et 512 et une sortie 513. Le signal de mesure $v_M$ délivré par le circuit diviseur a deux états de fréquence. Entre les impulsions de marquage $I_{min}$ et $I_{max}$ du signal $e_2$, le signal de mesure $v_M$ est à la fréquence $F_M = 500$ kHz délivré par l'oscillateur à quartz de mesure 2. Pendant chacune des impulsions $I_{min}$ et $I_{max}$, le signal $v_M$ est à la fréquence $F_M/2 - 250$ kHz. Dans la partie de réception, un signal correspondant aux deux états de fréquence, $F_M$ et $F_M/2$, est détecté au niveau de l'analyseur de liaison hertzienne 7, par démodulation de fréquence du signal vobulé $r_B$ provenant du convertisseur-abaisseur de fréquence 6. La Fig.5 montre une manière de récupérer les impulsions de marquage, dans la partie de réception, à l'aide d'une bascule du type D, 74, ayant une entrée de donnée D recevant le signal à deux états de fréquence, $F_M$ et $F_M/2$, et une entrée d'horloge H recevant un signal à fréquence $F_M$ délivré par l'oscillateur local asservi dans l'analyseur de liaison hertzienne 7. Une sortie Q de la bascule 74 délivre alors un train d'impulsion $V_S$ à fréquence $F_M/2$ pendant chacune des impulsions de marquage $I_{min}$ et $I_{max}$.

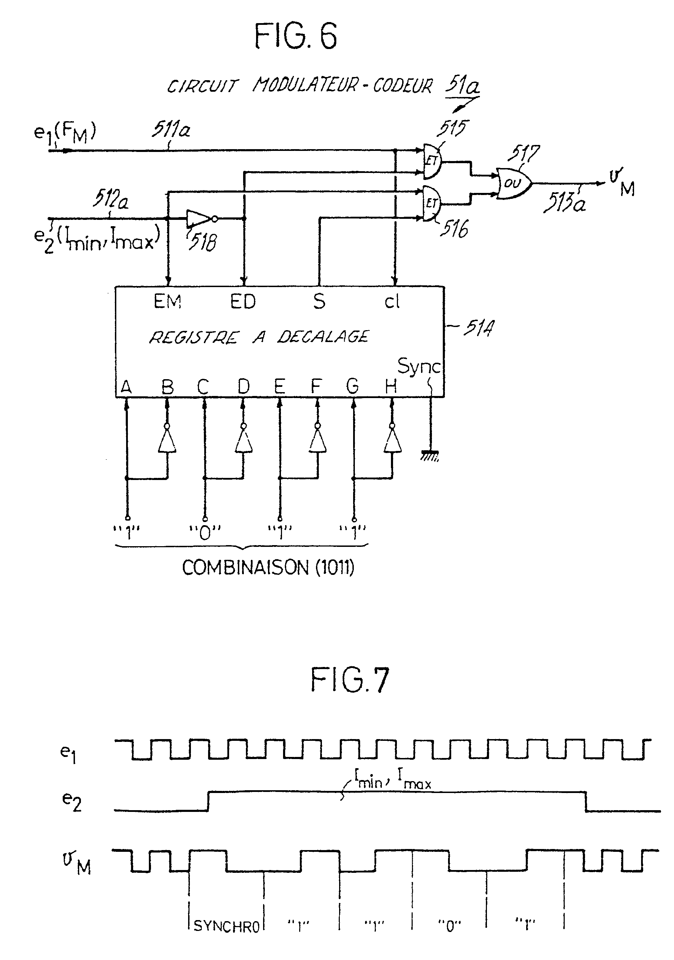

Une autre solution permet en outre de transmettre une information de service entre la partie d'émission et la partie de réception du banc de mesure et consiste en une modulation de fréquence codée du signal de mesure $v_M$. La Fig.6 montre un exemple de circuit modulateur-codeur 51a effectuant une modulation codée du signal de mesure $v_M$. Le circuit 51a remplace le modulateur de phase 51 et a deux entrées 511a et 512a et une sortie 513a correspondant aux bornes 511, 512 et 513 du modulateur 51 respectivement. Le circuit 51a comprend un registre à décalage 514 ayant quatre paires d'entrées parallèles A-B à G-H et une sortie série S, deux portes ET à deux entrées 515 et 516, une porte OU à deux entrées 517 et un inverseur 518. Selon la réalisation illustrée, les paires d'entrée A-B à G-H du registre 514 sont reliées à une mémoire morte, du type mémoire câblée, ayant enregistré un mot de code biphase à quatre digits "1011". Une borne Sync du registre 514 est reliée à le terre afin que le registre transmette le mot codé succédant à un signal de synchronisation en reponse aux impulsions du signal $e_2$, comme montré à la Fig.7. Le signal $e_2$ est appliqué directement et à travers l'inverseur 518 à des entrées de commande EM et ED du registre 514, et le signal de mesure $e_1$ est appliqué à une entrée d'horloge c1 du registre 514 afin que le registre soit activé entre les fronts montant et descendant de chacune des impulsions $I_{min}$ et $I_{max}$, celles-ci étant redressées dans le circuit 53 pour cette réalisation. La première porte ET 515 a deux entrées recevant respectivement le signal $e_1$ et un signal complémentaire du signal $e_2$ fourni par l'inverseur 518 afin de transmettre les impulsions du signal $e_1$ entre les impulsions $I_{min}$ et $I_{max}$. La seconde porte ET 516 a deux entrées recevant le signal $e_2$ et recevant le signal de synchronisation et le mot de code par la sortie S du registre 514 pour transmettre le signal de synchronisation et le mot de code pendant les impulsions $I_{min}$ et $I_{max}$. La porte OU 517 a deux entrées reliées à des sorties des portes 515 et 516 et délivre le signal $v_M$ par la borne 513a.

La dernière forme d'onde dans la Fig.7 correspond au signal de mesure $v_M$ obtenu pendant les impulsions de marquage $I_{min}$, $I_{max}$ pour un mot de code "1001".

Dans la partie de réception du banc de mesure, les impulsions codées peuvent être démodulées de la même manière que précédemment à l'ride de la bascule 74 représentée à la Fig.5. La dernière forme d'onde à la Fig.8 correspond au train d'impulsion $V_S$ récupéré en sortie Q de la bascule pour le même mot de code "1001". Le train d'impulsion $V_S$ est ensuite exploité pour fournir une impulsion de synchronisation à la réception et une information de service correspondant au mot de code. Cette information de service peut être utilisée, par exemple, pour signaler à la réception la fréquence centrale de la bande explorée $\Delta F_W$, ou la largeur de cette même bande $\Delta F_W$.

Dans les deux cas précédents, utilisant une modulation de fréquence et une modulation de fréquence codée du signal de mesure $v_M$, l'information de synchronisation reste très stable et indépendante des variations des signaux mesurés. L'erreur absolue introduite reste inférieure à la demi-période $1/(2F_M)$, et est très faible et tout à fait négligeable par rapport à l'erreur due au vobulateur hyperfréquence 4.

## Revendications

1. Banc de mesure pour liaison hertzienne comprenant : dans une partie d'émission,

un oscillateur de mesure (2) pour délivrer un signal impulsionnel ($e_1$) ayant une fréquence prédéterminée moyenne ($F_M$),

des moyens (1) pour générer un signal d'exploration ($v_B$) ayant une fréquence prédéterminée basse ($F_B$) et un signal impulsionnel de marquage ($e_2$) synchrone avec le signal d'exploration ($v_B$),

des moyens pour sommer (3) le signal d'exploration ($v_B$) et un signal analogique en un signal de vobulation ($e_W$),

des moyens de vobulation hyperfréquence (4) commandés par le signal de vobulation ($e_W$,) produisant un signal vobulé ($e_P$) à émettre, et

dans une partie de réception, des moyens (7) recevant le signal vobulé ($r_P$) à travers la liaison hertzienne (41, 61) pour analyser des paramètres de la liaison hertzienne, tels que temps de propagation de groupe ($TPG_A$) de la liaison,

caractérisé en ce qu'il comprend :

dans la partie d'émission,

des moyens pour moduler (51) le signal impulsionnel ($e_1$) à fréquence moyenne ($F_M$) pendant des impulsions ($I_{min}$, $I_{max}$) du signal impulsionnel de marquage ($e_2$) afin d'obtenir un signal de mesure périodiquement modulé ($v_M$) constituant ledit signal analogique appliqué aux moyens pour sommer (3), et

dans la partie de réception,

des moyens (8) pour déduire des signaux synchrones ($V_{SR}$, $V_F$) avec le signal d'exploration ($v_B$) à partir de signaux produits par les moyens pour analyser (7).

2. Banc de mesure conforme à la revendication 1, caractérisé en ce que les moyens pour déduire (8) comprennent des moyens (81) pour récupérer des impulsions ($I_{min}$, $I_{max}$) du signal de marquage afin de fournir un signal de synchronisation à la réception ($V_{SR}$) ayant ladite fréquence busse ($F_B$), et des moyens (82) pour délivrer un signal de fréquences ($V_F$) ayant une fréquence d'échantillonnage ($F_E$) égale à la fréquence basse ($F_B$) multipliée par un facteur entier (N), le signal de synchronisation à la réception ($V_{SR}$) et le signal de fréquences ($V_F$) étant lesdits signaux synchrones avec le signal d'exploration ($V_B$).

3. Banc de mesure conforme à la revendication 1 ou 2, caractérisé en ce que les moyens pour générer (1) comprennent des moyens à oscillateur (11, 12) pour générer un signal impulsionnel à ladite fréquence basse ($F_B$), une mémoire morte (13) contenant des échantillons numériques définissant le signal d'exploration ($v_B$) et commandée en lecture par ledit signal impulsionnel à la fréquence basse, des moyens (14, 15) pour convertir les échantillons numériques lus en le signal d'exploration ($v_B$), et des moyens (53) pour produire les impulsions ($I_{min}$, $I_{max}$) du signal de marquage($e_2$) en fonction d'un signal de synchronisation de lecture ($V_{SE}$) ayant ladite fréquence basse ($F_B$) et produit par ladite mémoire (13).

4. Banc de mesure conforme à la revendication 3, caractérisé en ce que lesdits échantillons numériques définissent un signal d'exploration sinusoïdal ($v_B$), et en ce que le signal impulsionnel de marquage ($e_2$) est constitué d'impulsions de marquage ($I_{min}$, $I_{max}$) positives et négatives correspondant respectivement à des amplitudes maximale et minimale du signal d'exploration ($v_B$), lesdites impulsions de marquage ($I_{min}$, $I_{max}$) étant, de préférence, retardées d'une durée prédéterminée ($\tau$) par un circuit de retard (52) interconnecté entre les moyens pour produire les impulsions (53) et les moyens pour moduler (51).

5. Banc de mesure conforme à la revendication 2 et à la revendication 3 ou 4, caractérisé en ce que lesdits moyens pour générer un signal impulsionnel à la fréquence basse comprennent un oscillateur de grande stabilité (11) fournissant un signal impulsionnel à fréquence élevée ($F_Q$) et un diviseur de fréquence (12) recevant le signal impulsionnel à fréquence élevée pour adresser cycliquement en lecture la mémoire morte (13) à ladite fréquence basse ($F_B$), et en ce que lesdits moyens pour délivrer le signal de fréquences (82) comprennent un synthétiseur-multiplicateur (82) recevant ledit signal de synchronisation à la réception ($V_{SR}$).

6. Banc de mesure conforme à la revendication 2 et à la revendication 3 ou 4, caractérisé en ce que lesdits moyens pour générer un signal impulsionnel à la fréquence basse comprennent un diviseur programmable (12') divisant en fréquence le signal impulsionnel ($e_1$) à la fréquence moyenne ($F_M$) délivré par l'oscillateur de mesure (2) afin d'adresser cycliquement en lecture la mémoire morte (13) à ladite fréquence basse ($F'_B$), et en ce que lesdits moyens pour analyser (7) comprennent un oscillateur local (73) asservi à travers la liaison hertzienne (41, 61) à l'oscillateur de mesure (2) pour fournir un signal à ladite fréquence moyenne ($F_M$) synchrone avec ledit signal de synchronisation à la réception ($V_{SR}$), et lesdits moyens pour délivrer le signal de fréquences (82) comprennent un diviseur de fréquence programmable (82') recevant ledit signal synchrone à ladite fréquence moyenne ($F_M$) pour délivrer ledit signal de fréquences ($V_F$).

7. Banc de mesure conforme à la revendication 2 et l'une quelconque des revendications 3 à 6, caractérisé en ce que lesdits moyens pour moduler comprennent un modulateur de phase (51) délivrant le signal de mesure ($v_M$) modulé en phase pendant les impulsions du signal de marquage ($I_{min}$, $I_{max}$), et en ce que lesdits moyens (81) pour récupérer les impulsions du signal de marquage ($I_{min}$, $I_{max}$) comprennent un circuit séparateur-écrêteur (81) recevant un signal temps de propagation de groupe ($TPG_A$) produit par les moyens pour analyser (7) pour séparer par écrêtage au-delà de seuils prédéterminés ($TPG_{min}$, $TPG_{max}$) les impulsions de marquage ($I_{min}$, $I_{max}$) mélangées avec le signal temps de propagation de groupe ($TPG_A$).

8. Banc de mesure conforme à la revendication 2 et à l'une quelconque des revendications 3 à 6, caractérisé en ce que lesdits moyens pour moduler (51) comprennent un diviseur de fréquence par un rapport déterminé (2) recevant par une première entrée (511) le signal impulsionnel ($e_1$) de fréquence moyenne ($F_M$), par une deuxième entrée (512) le signal impulsionnel de marquage ($e_2$) et délivrant par une sortie (513) un signal de mesure modulé ($v_M$) ayant des premier et second états de fréquence, ledit premier état correspondant à la fréquence moyenne divisée par ledit rapport ($F_M/2$) et étant délivré pendant les impulsions de marquage ($I_{min}$, $I_{max}$), et ledit second état correspondant à la fréquence moyenne ($F_M$) et étant délivré entre les impulsions de marquage ($I_{min}$, $I_{max}$), et en ce que les moyens pour récupérer (81) reçoivent des moyens pour analyser (7) un signal à deux états de fréquence correspondant au signal de mesure modulé ($v_M$) et un signal à fréquence moyenne ($F_M$) d'un oscillateur local (73) inclus dans les moyens pour analyser (7) pour délivrer un train d'impulsion ayant une fréquence ($F_M/2$) égale à la fréquence moyenne divisée par ledit rapport, pendant chacune des impulsions ($I_{min}$, $I_{max}$).

9. Banc de mesure conforme à la revendication 2 et à l'une quelconque des revendications 3 à 6, caractérisé en ce que les moyens pour moduler comprennent des moyens pour mémoriser un mot de code numérique ("1011") et des moyens (51a) recevant à des entrées le signal impulsionnel ($e_1$) à fréquence moyenne ($F_M$), le signal impulsionnel de marquage ($e_2$) et le mot de code numérique ("1011") pour délivrer le signal de mesure modulé ($v_M$), le signal de mesure modulé ($v_M$) étant équivalent au signal impulsionnel ($e_1$) à fréquence moyenne ($F_M$) entre les impulsions de marquage ($I_{min}$, $I_{max}$) et étant constitué d'un train d'impulsions codées incluant ledit mot de code pendant les impulsions de marquage ($I_{min}$, $I_{max}$), et en ce que les moyens pour récupérer (81) reçoivent des moyens pour analyser (7) un signal codé correspondant au signal de mesure modulé ($v_m$) et un signal à fréquence moyenne ($F_M$) d'un oscillateur local (73) inclus dans les moyens pour analyser (7) pour délivrer ledit train d'impulsions codées pendant chacune des impulsions de marquage ($I_{min}$, $I_{max}$).

10. Banc de mesure conforme à la revendication 9, caractérisé en ce que les moyens (51a) recevant en entrée le signal impulsionnel ($e_1$) à fréquence moyenne ($F_M$), le signal impulsionnel de marquage ($e_2$) et le mot de code ("1011") pour délivrer en sortie le signal de mesure modulé ($v_M$) comprennent un registre à décalage à entrées parallèles et à sortie série.

**Patentansprüche**

1. Meßbank für Richtfunklinie, bestehend aus:
   in einem Sendeteil,
   einem Meßoszillator (2) zur Erzeugung eines impulsförmigen Signals ($e_1$) mit einer vorgegebenen mittleren Frequenz ($F_M$), Einrichtungen (1) zur Erzeugung eines Prüfsignals ($v_B$) mit einer vorgegebenen niedrigen Frequenz ($F_B$) und einem zum Prüfsignal ($v_B$) synchronen impulsförmigen Kennungssignal ($e_2$), Einrichtungen (3) zum Aufsummieren des Prüfsignals ($v_B$) und eines analogen Signals zu einem Wobbel-Signal (vobulation) ($e_W$), einer ultrahochfrequenten Wobbel-Einrichtung (4), die vom Wobbel-Signal ($e_W$) gesteuert wird und ein gewobbeltes Signal ($e_P$) aussendet, und
   in einem Empfangsteil,
   einer Einrichtung (7), die das gewobbelte Signal ($r_P$) über die Richtfunkstrecke (41, 61) empfängt, um die Parameter der Richtfunkstrecke, wie die Gruppenlaufzeit ($TPG_A$) der Richtfunkstrecke, zu analysieren, gekennzeichnet durch die Bestandteile:
   im Sendeteil,
   Einrichtungen (51) zur Modulation des impulsförmigen Signals ($e_1$) der mittleren Frequenz ($F_M$) während der Impulse ($I_{min}$, $I_{max}$) des impulsförmigen Kennungssignals ($e_2$), um ein periodisches moduliertes Meßsignal ($v_M$) zu erhalten, das das Analogsignal bildet, das auf die Additionseinrichtung (3) gegeben wird, und in der Empfangseinheit,
   Einrichtungen (8) zur Ableitung synchroner Signale ($V_{SR}$, $V_F$) mit dem Prüfsignal ($v_B$) aus den von den Analysiereinrichtungen (7) erzeugten Signalen.

2. Meßbank nach Anspruch 1, dadurch gekennzeichnet, daß die Einrichtungen zur Ableitung (8) Einrichtungen (81) zur Wiedergewinnung der Impulse ($I_{min}$, $I_{max}$) des Kennungssignals aufweisen, um am Empfang ($V_{SR}$) ein Synchronisiersignal zur Verfügung zu stellen, das die niedrige Frequenz ($F_B$) aufweist, und Einrichtungen (82) zur Abgabe eines Frequenzsignals ($V_F$) mit einer Auswahlfrequenz ($F_E$) aufweisen, die gleich der niedrigen Frequenz ($F_B$) multipliziert mit einem ganzen Faktor (N) ist, wobei das Synchronisiersignal am Empfang ($V_{SR}$) und das Frequenzsignal ($V_F$) die synchronen Signale mit dem Prüfsignal ($v_B$) sind.

3. Meßbank nach Anspruch 1 oder 2, dadurch gekennzeichnet, daß die Generatoreinrichtungen (1) Oszillatoreinrichtungen (11, 12) zur Generierung eines impulsförmigen Signals der niedrigen Frequenz ($F_B$), einen statischen Speicher (13), der numerische Muster enthält, die das Prüfsignal ($v_B$) definieren und dessen Auslesen durch das impulsförmige Signal der niedrigen Frequenz gesteuert wird, Einrichtungen (14, 15) zur Konvertierung der ausgelesenen numerischen Muster in das Prüfsignal ($v_B$) und Einrichtungen (53) zur Erzeugung der Impulse ($I_{min}$, $I_{max}$) des Kennungssignals ($e_2$) als Funktion eines Synchronisier-Lesesignals ($V_{SE}$) mit der niedrigen Frequenz ($F_B$), das durch den Speicher (13) erzeugt wird, aufweisen.

4. Meßbank nach Anspruch 3, dadurch gekennzeichnet, daß die numerischen Muster ein sinusförmiges Prüfsignal ($v_B$) definieren, und daß das impulsförmige Kennungssignal ($e_2$) durch positive und negative Kennungsimpulse ($I_{min}$, $I_{max}$) gebildet ist, die jeweils der maximalen und minimalen Amplitude des Prüfsignals ($v_B$) entsprechen, wobei die Kennungsimpulse ($I_{min}$, $I_{max}$) vorzugsweise um eine vorbestimmte Dauer ($\tau$) durch einen Verzögerer (52) verzögert werden, der zwischen die Impulserzeugungseinrichtung (53) und der Modulationseinrichtung (51) geschaltet ist.

5. Meßbank nach Anspruch 2 und Anspruch 3 oder 4, dadurch gekennzeichnet, daß die Generatoreinrichtung für das impulsförmige Signal der niedrigen Frequenz einen Oszillator hoher Stabilität (11), der ein impulsförmiges Signal hoher Frequenz ($F_Q$) liefert, und einen Frequenzteiler (12) aufweist, der das impulsförmige Signal hoher Frequenz empfängt, um zyklisch den statischen Speicher (13) mit der niedrigen Frequenz ($F_B$) auszulesen, und daß die Einrichtung zur Abgabe des Frequenzsignals (82) einen Synthetisierer-Multiplizierer (82) aufweist, der das Synchronisiersignal am Empfang ($V_{SR}$) aufnimmt.

6. Meßbank nach Anspruch 2 und Anspruch 3 oder 4, dadurch gekennzeichnet, daß die Generatoreinrichtungen für ein impulsförmiges Signal niedriger Frequenz einen programmierbaren Teiler (12') aufweisen, der das impulsförmige Signal ($e_1$) der mittleren Frequenz ($F_M$), das vom Meßoszillator (2) abgegeben wird, in der Frequenz teilt, um zyklisch den statischen Speicher (13) mit der niedrigen Frequenz ($F'_B$) auszulesen, und daß die Analysiereinrichtungen (7) einen lokalen Oszillator (73) aufweisen, der über die Richtfunkstrecke (41, 61) vom Meßoszillator (2) gesteuert wird, um ein Signal der mittleren Frequenz ($F_M$) synchron zum Synchronisiersignal am Empfang ($V_{SR}$) bereitzustellen, und daß die Einrichtungen zur Abgabe des Frequenzsignals (82) einen programmierbaren Frequenzteiler (82') aufweisen, der das synchrone Signal der mittleren Frequenz ($F_M$) empfängt, um das Frequenzsignal ($V_F$) abzugeben.

7. Meßbank nach Anspruch 2 und einem der Ansprüche 3 bis 6, dadurch gekennzeichnet, daß die Modulationseinrichtungen einen Phasenmodulator (51) aufweisen, der das phasenmodulierte Meßsignal ($v_M$) während der Impulse des Kennungssignals ($I_{min}$, $I_{max}$) abgibt, und daß die Einrichtungen (81) zur Wiedergewinnung der Impulse des Kennungssignals ($I_{min}$, $I_{max}$) einen Separator und Begrenzer (81) aufweisen, die das Gruppenlaufzeitsignal ($TPG_A$), das von den Analysiereinrichtungen (7) erzeugt wird, empfangen und durch Abschneiden jenseits vorgegebener Schwellen ($TPG_{min}$, $TPG_{max}$) die Kennungsimpulse ($I_{min}$, $I_{max}$), die mit dem Gruppenlaufzeitsignal ($TPG_A$) vermischt sind, separieren.

8. Meßbank nach Anspruch 2 und einem der Ansprüche 3 bis 6, dadurch gekennzeichnet, daß die Modulationseinrichtungen (51) einen Frequenzteiler mit einem vorgegebenen Verhältnis (2) aufweisen, der über einen ersten Eingang (511) das impulsförmige Signal ($e_1$) der mittleren Frequenz ($F_M$) und über einen zweiten Eingang (512) das impulsförmige Kennungssignal ($e_2$) empfängt und über einen Ausgang (513) ein moduliertes Meßsignal ($v_M$) abgibt, das einen ersten und einen zweiten Frequenzzustand aufweist, wobei der erste Zustand der mittleren Frequenz dividiert durch das Verhältnis ($F_M/2$) entspricht und während der Kennungsimpulse ($I_{min}$, $I_{max}$) abgegeben wird und der zweite Zustand der mittleren Frequenz ($F_M$) entspricht und zwischen den Kennungsimpulsen ($I_{min}$, $I_{max}$) abgegeben wird, und daß die Einrichtungen zur Wiedergewinnung (81) von den Analysiereinrichtungen (7) ein Signal mit zwei Frequenzzuständen empfangen, das dem modulierten Meßsignal ($v_M$) und einem Signal mittlerer Frequenz ($F_M$) eines lokalen Oszillators (73) entspricht, der in den Analysiereinrichtungen (7) enthalten ist, um eine Folge von Impulsen mit der Frequenz ($F_M/2$), die der mittleren Frequenz dividiert durch das Verhältnis entspricht, während jedes Impulses ($I_{min}$, $I_{max}$) abzugeben.

9. Meßbank nach Anspruch 2 und einem der Ansprüche 3 bis 6, dadurch gekennzeichnet, daß die Modulationseinrichtungen Einrichtungen zum Abspeichern eines numerisch codierten Wortes ("1011") und Einrichtungen (51a), die an den Eingängen das impulsförmige Signal ($e_1$) der mittleren Frequenz ($F_M$), das impulsförmige Kennungssignal ($e_2$) und das codierte numerische Wort ("1011") empfangen und das modulierte Meßsignal ($v_M$) abgeben, aufweisen, wobei das modulierte Meßsignal ($v_M$) dem impulsförmigen Signal ($e_1$) der mittleren Frequenz ($F_M$) zwischen den Kennungsimpulsen ($I_{min}$, $I_{max}$) entspricht und durch eine Folge von codierten Impulsen, die das codierte Wort beinhalten, während der Kennungsimpulse ($I_{min}$, $I_{max}$) gebildet wird, und daß die Wiedergewinnungseinrichtungen (81) von den Analysiereinrichtungen (7) ein codiertes Signal empfangen, das dem modulierten Meßsignal ($v_m$) und einem Signal mittlerer Frequenz ($F_M$) eines lokalen Oszillators (73) entspricht, der in den Analysiereinrichtungen (7) enthalten ist, um die codierte Impulskette während jedes Kennungsimpulses ($I_{min}$, $I_{max}$) abzugeben.

10. Meßbank nach Anspruch 9, dadurch gekennzeichnet, daß die Einrichtungen (51a), die am Eingang das impulsförmige Signal ($e_1$) der mittleren Frequenz ($F_M$), das impulsförmige Kennungssignal ($e_2$) und das codierte Wort ("1011") empfangen, um am Ausgang das modulierte Meßsignal ($v_M$) abzugeben, ein Schieberegister mit parallelen Eingängen und einem seriellen Ausgang aufweisen.

## Claims

1. Radio link test bench comprising :

in a transmission section,

a measurement oscillator (2) for delivering a pulse signal ($e_1$) having a predetermined medium frequency ($F_M$),

means (1) for generating an exploration signal ($v_B$) having a predetermined low frequency ($F_B$) and a marking pulse signal ($e_2$) synchronous with the exploration signal ($v_B$),

means (3) for summating the exploration signal ($v_B$) and an analog signal into a wobbulation signal ($e_W$),

radio frequency wobbulation means (4) controlled by the wobbulation signal ($e_W$) for producing a wobbulated signal ($e_P$) to be transmitted, and

in a receiving section, means (7) receiving the wobbulated signal ($r_P$) through the radio link (41, 61) for analyzing radio link parameters, such as group propagation time ($TPG_A$) of the link,

characterized in that it comprises :

in the transmission section,

means (51) for modulating the medium frequency ($F_M$) pulse signal ($e_1$) during pulses ($I_{min}$, $I_{max}$) of the marking pulse signal ($e_2$) thereby deriving a periodically modulated measurement signal ($v_M$) forming said analog signal applied to the summating means (3), and

in the receiving section,

means (8) for deducing signals ($V_{SR}$, $V_F$) synchronous with the exploration signal ($v_B$) as from signals produced by the analyzing means (7).

2. Test bench according to claim 1, characterized in that the deducing means (8) comprise means (81) for recovering pulses ($I_{min}$, $I_{max}$) of the marking signal thereby supplying a receiving synchronization signal ($V_{SR}$) having said low frequency ($F_B$), and means (82) for delivering a frequencies-signal ($V_F$) having a sampling frequency ($F_E$) equal to the low frequency ($F_B$) multiplied by an integer factor (N), the receiving synchronization signal ($V_{SR}$) and the frequencies-signal ($V_F$) being said signals synchronous with the exploration signal ($V_B$).

3. Test bench according to claim 1 or 2, characterized in that the generating means (1) comprise oscillator means (11, 12) for generating a pulse signal with said low frequency ($F_B$), a read-only-memory (13) containing digital samples defining the exploration signal ($v_B$) and read controlled by said low-frequency pulse signal, means (14, 15) for converting the read digital samples into the exploration signal ($v_B$), and means (53) for producing the pulses ($I_{min}$, $I_{max}$) of the marking signal ($e_2$) depending on a read synchronization signal ($V_{SE}$) having low frequency ($F_B$) and produced by said memory (13).

4. Best bench according to claim 3, characterized in that said digital samples define a sine-wave exploration signal ($v_B$) and in that the marking pulse signal ($e_2$) consists of positive and negative marking pulses ($I_{min}$, $I_{max}$) corresponding respectively to maximum and minimum amplitudes of the exploration signal ($v_B$), said marking pulses ($I_{min}$, $I_{max}$) being, preferably, delayed during a predetermined time ($\tau$) by a delay circuit (52) interconnected between the pulse producing means (53) and the modulating means (51).

5. Test bench according to claim 2 and claim 3 or 4, characterized in that said low-frequency pulse signal generating means comprise a high stability oscillator (11) supplying a high-frequency pulse signal ($F_Q$) and a frequency divider (12) receiving the high-frequency pulse signal for cyclically read addressing the read-only-memory (13) at said low frequency ($F_B$), and in that said frequencies-signal delivering means (82) comprise a synthesizer-multiplier (82) receiving said receiving synchronization signal ($V_{SR}$).

6. Test bench according to claim 2 and claim 3 or 4, characterized in that said low-frequency pulse signal generating means comprise a programmable divider (12') frequency-dividing the medium-frequency ($F_M$) pulse signal ($e_1$) delivered by the measurement oscillator (2) thereby cyclically read addressing the read-only-memory (13) at said low frequency ($F'_B$), and in that said analyzing means (7) comprise a local oscillator (73) slaved through the radio-link (41, 61) to the measurement oscillator (2) for supplying a signal at said medium-frequency ($F_M$) synchronous with said receiving synchronization signal ($V_{SR}$) and said frequencies-signal (82) delivering means comprise a programmable frequency divider (82') receiving said synchronous signal at said medium frequency ($F_M$) for delivering said frequencies-signal ($V_F$).

7. Test bench according to claim 2 and any one of claims 3 to 6, characterized in that said modulating means comprise a phase modulator (51) delivering the measurement signal ($v_M$) phase-modulated during the pulses of the marking signal ($I_{min}$, $I_{max}$), and in that said means (81) for recovering marking signal

pulses ($I_{min}$, $I_{max}$) comprise a separator-clipper circuit (81) receiving a group propagation time signal ($TGP_A$) produced by the analyzing means (7) for separating by clipping beyond predetermined thresholds ($TPG_{min}$, $TPG_{max}$), the marking pulses ($I_{min}$, $I_{max}$) mixed with the group propagation time signal ($TPG_A$).

8. Test bench according to claim 2 and any one of claims 3 to 6, characterized in that said modulating means (51) comprise a predetermined-ratio frequency divider (2) receiving via a first input (511) the medium-frequency ($F_M$) pulse signal ($e_1$), via a second input (512) the marking pulse signal ($e_2$), and delivering by an output (513) a modulated measurement signal ($v_M$) having first and second frequency states, said first state corresponding to the medium frequency divided by said ratio ($F_M/2$) and being delivered during the marking pulses ($I_{min}$, $I_{max}$), and said second state corresponding to the medium frequency ($F_M$) and being delivered between said marking pulses ($I_{min}$, $I_{max}$), and in that the recovering means (81) receive from the analyzing means (7) a two-frequency-state signal corresponding to the modulated measurement signal ($v_M$) and a medium-frequency signal ($F_M$) from a local oscillator (73) included in the analyzing means (7) for supplying a pulse stream having a frequency ($F_M/2$) equal to the medium frequency divided by said ratio, during each of the pulses ($I_{min}$, $I_{max}$).

9. Test bench according to claim 2 and any one of claims 3 to 6, characterized in that the modulating means comprise means for storing a digital code word ("1011") and means (51a) receiving on inputs the intermediate-frequency ($F_M$) pulse signal ($e_1$), the marking pulse signal ($e_2$) and the digital code word ("1011") for delivering the modulated measurement signal ($v_M$), the modulated measurement signal ($v_M$) being equivalent to the intermediate-frequency ($F_M$) pulse signal ($e_1$) between the marking pulses ($I_{min}$, $I_{max}$), and consisting of an encoded pulse stream including said code word during the marking pulses ($I_{min}$, $I_{max}$), and in that the recovering means (81) receive from the analyzing means (7) an encoded signal corresponding to the modulated measurement signal ($v_m$) and a medium-frequency signal ($F_M$) from a local oscillator (73) that is included in the analyzing means (7), thereby supplying said encoded pulse stream during each of the marking pulses ($I_{min}$, $I_{max}$).

10. Test bench according to claim 10, characterized in that the means (51a) receiving on input the medium-frequency ($F_M$) pulse signal ($e_1$), the marking pulse signal ($e_2$) and the code word ("1011") for delivering on output the modulated measurement signal ($v_M$) include a parallel-input and serial-output shift register.

EP 0 256 944 B1

FIG.1

11

# FIG.2

# FIG.3

# FIG. 4

GENERATEUR DE SIGNAL D'EXPLORATION — 1

DIVISEUR PROGRAMMABLE — 12'
$N_1 = 32768$

$F'_B = 15,25\,Hz$

MEMOIRE ROM (SINUS) — 13

142     141

5

IMPULSIONS $I_{min}, I_{max}$ — 53

CIRCUIT DE RETARD $\tau = 1,3\,ms$ — 52

$e_2$   512

51

MODULATEUR DE PHASE $\pm\psi = \pm 36°$

511    513

CIRCUIT DE MARQUAGE

$e_1$

OSCILLATEUR A QUARTZ DE MESURE $F_M = 500\,kHz$ — 2

CONVERTISSEUR $N \rightarrow A$ — 14

15

FILTRE PASSE-BAS

$N_B$

31

SOMMATEUR

$U_M$ 32

$e_W$ — 3

VOBULATEUR HYPERFREQUENCE $\Delta F = 10,7$ à $11,7\,GHz$ — 4

$e_P$

LIAISON HERTZIENNE LARGE BANDE — 41

$F_M$

UNITE DE VISUALISATION OU D'ENREGISTREMENT — 9

$F_E = 7812,5\,Hz$ — $V_F$

82'

DIVISEUR PROGRAMMABLE $N_2 = 64$

$F_B = 15,2588\,Hz$

$V_{SR}$ (Synchro) — 812

SEPARATEUR-ECRETEUR — 813

81   811

CIRCUIT DE RECUPERATION DE FREQUENCES — 8

temps de propagation de groupe $TPG_A$

Amplitude A

TPG

$r_B$ — 72   7   71

CONVERTISSEUR ABAISSEUR DE FREQUENCE — 6

$r_P$

61

731

ANALYSEUR DE FAISCEAU HERTZIEN

OSCILLATEUR LOCAL ASSERVI $F_M = 500\,kHz$ — 73

13

# FIG.5

Signal $F_M$ et $F_M/2$
reçu

74

D

BASCULE D    Q    $V_S$

H

Signal $F_M$
oscillateur asservi

# FIG.8

SIGNAL DE
FREQUENCE $F_M$
REÇU

SIGNAL DE
FREQUENCE $F_M$
OSCILLATEUR ASSERVI

$V_S$

|SYNCHRO| "1" | "1" | "0" | "1" |

# FIG. 6

CIRCUIT MODULATEUR - CODEUR *51a*

COMBINAISON (1011)

# FIG.7